(19) **Europäisches Patentamt**

**European Patent Office**

**Office européen des brevets**

(11) **EP 1 546 823 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(21) Anmeldenummer: **03797974.7**

(22) Anmeldetag: **29.09.2003**

(51) Int Cl.:
*G05B 13/02* <sup>(2006.01)</sup>     *G05B 23/02* <sup>(2006.01)</sup>

(86) Internationale Anmeldenummer:
**PCT/AT2003/000289**

(87) Internationale Veröffentlichungsnummer:
**WO 2004/029738 (08.04.2004 Gazette 2004/15)**

(54) **VERFAHREN ZUR RECHNERGESTÜTZTEN ERSTELLUNG VON PROGNOSEN FÜR OPERATIVE SYSTEME SOWIE SYSTEM ZUR ERSTELLUNG VON PROGNOSEN FÜR OPERATIVE SYSTEME**

METHOD FOR THE COMPUTER-SUPPORTED GENERATION OF PROGNOSES FOR OPERATIVE SYSTEMS AND SYSTEM FOR THE GENERATION OF PROGNOSES FOR OPERATIVE SYSTEMS

PROCEDE D'ELABORATION ASSISTEE PAR ORDINATEUR DE PRONOSTICS POUR DES SYSTEMES OPERATIONNELS ET SYSTEME POUR ELABORER DES PRONOSTICS POUR DES SYSTEMES OPERATIONNELS

(84) Benannte Vertragsstaaten:
**AT BE BG CH CY CZ DE DK EE ES FI FR GB GR HU IE IT LI LU MC NL PT RO SE SI SK TR**

(30) Priorität: **30.09.2002 AT 14722002**

(43) Veröffentlichungstag der Anmeldung:
**29.06.2005 Patentblatt 2005/26**

(73) Patentinhaber: **Kranner, Gerhard**
**2380 Perchtoldsdorf (AT)**

(72) Erfinder: **Kranner, Gerhard**
**2380 Perchtoldsdorf (AT)**

(74) Vertreter: **Sonn & Partner Patentanwälte**
**Riemergasse 14**
**1010 Wien (AT)**

(56) Entgegenhaltungen:
**EP-A- 0 749 014         WO-A-01/80176**
**DE-A- 19 742 902       US-A- 5 541 590**

**Beschreibung**

Die Erfindung betrifft ein Verfahren zur rechnergestützten Erstellung von Prognosen für operative Systeme, insbesondere für Steuerungsprozesse u. dgl., auf Basis von mehrdimensionalen, einen System-, Produkt- und/oder Prozesszustand beschreibenden Datensätzen unter Anwendung der SOM-Methode, bei der ein geordnetes Raster von die Datenverteilung repräsentierenden Knoten bestimmt wird.

Weiters bezieht sich die Erfindung auf ein System zur Erstellung von Prognosen für operative Systeme, insbesondere für Steuerungsprozesse, auf Basis von mehrdimensionalen, einen System-, Produkt- und/oder Prozesszustand beschreibenden Datensätzen, mit einer Datenbank zur Speicherung der Datensätze sowie mit einer SOM-Einheit zur Bestimmung eines geordneten Rasters von die Datenverteilung repräsentierenden Knoten.

Zahlreiche Steuertechniken in operativen Systemen, z.B. bei der industriellen Fertigung oder auch bei der Automatisierung von Marketingmaßnahmen bis hin zu finanztechnischen Handelssystemen, basieren auf automatischen Einheiten zur Generierung von Prognosen bestimmter Merkmals-, Qualitäts- oder Systemparameter. Die Genauigkeit und Zuverlässigkeit solcher Prognoseeinheiten ist zumeist eine wesentliche Voraussetzung für das effiziente Funktionieren der gesamten Steuerung.

Die Implementierung der Prognosemodelle hiefür erfolgt häufig auf Basis klassischer statistischer Methoden (sog. Multivariate Modelle). Die Zusammenhänge, die in den zugrunde liegenden Prognosemodellen erfasst werden sollten, sind allerdings oft von nichtlinearer Natur. Für diese Prognosemodelle sind die konventionellen statistischen Methoden einerseits nicht direkt anwendbar und andererseits, als nichtlineare statistische Erweiterungen, schwer automatisierbar.

Zur Modellierung nichtlinearer Abhängigkeiten wurde daher zum Teil auf methodische Ansätze aus dem Bereich der künstlichen Intelligenz (Genetische Algorithmen, Neuronale Netze, Entscheidungsbäume etc.) zurückgegriffen, die eine bessere Ausschöpfung der Information in nichtlinearen Zusammenhängen versprechen. Prognosemodelle, die auf diesen Methoden beruhen, werden jedoch in automatisierten Systemen kaum eingesetzt, weil ihre Effizienz und Stabilität bzw. Zuverlässigkeit im Allgemeinen nicht sichergestellt werden kann. Ein Grund hiefür liegt im Fehlen statistisch gesicherter Aussagen über die Grenzen der Effizienz und Gültigkeit von Black-Box-Modellen, d. h. in Problemen im Zusammenhang mit Overfitting, Generalisierbarkeit, Erklärungskomponenten usw.

Die vorliegende Technik beruht nun auf der Anwendung der sogenannten SOM-Methode (SOM - Self-Organizing-Maps - Selbstorganisierende Karten). Diese SOM-Methode, die als Basis für nichtlineare Datenrepräsentationen Verwendung findet, ist an sich gut bekannt, vergl. T. Kohonen, "Self-Organizing Maps", 3.Auflage, Springer Verlag Berlin, 2001. Selbstorganisierende Karten stellen eine nicht-parametrische Regressionsmethode dar, durch welche Daten beliebiger Dimension in einen Raum niedrigerer Dimension abgebildet werden. Dabei entsteht eine Abstraktion der ursprünglichen Daten.

Das gebräuchlichste Verfahren zur Datenrepräsentation bzw. auch zur Visualisierung bei der SOM-Methode beruht auf einem zwei-dimensionalen hexagonalen Raster von Knoten zur Darstellung der SOM. Ausgehend von einer Reihe numerischer multivariater Datensätze passen sich die Knoten des Rasters während eines Adaptierungsvorganges kontinuierlich der Form der Datenverteilung an. Aufgrund der Tatsache, dass die Ordnung der Knoten untereinander die Nachbarschaft innerhalb der Datenmenge reflektiert, können Merkmale und Eigenschaften der Datenverteilung aus der entstehenden "Landschaft" direkt abgelesen werden. Die resultierende "Karte" stellt eine lokal Topologie-erhaltende Repräsentation der ursprünglichen Datenverteilung dar.

Zur verdeutlichung der SOM-Methode kann folgendes Beispiel angeführt werden:

Es finden sich 1000 Personen auf einem Fußballfeld ein, die zufällig verteilt auf der Spielfläche stehen. Es werden nun 10 Merkmale (z.B. Geschlecht, Alter, Körpergröße, Einkommen usw.) definiert, anhand derer sich alle 1000 Personen untereinander vergleichen sollen. Sie unterhalten sich und tauschen nun solange ihre Plätze, bis jeder von ihnen von Personen umgeben ist, die ihm in Bezug auf die definierten Vegleichsei-genschaften am ähnlichsten sind. Es wird somit eine Situation erreicht, bei der jeder der Beteiligten in Bezug auf die Gesamtheit der Merkmale seinem unmittelbaren Nachbarn am ähnlichsten ist.

Damit wird deutlich, wie es möglich ist, trotz der Mehrdimensionalität der Daten zu einer zweidimensionalen Darstellung zu kommen. Nun ist es mit dieser Verteilung der Personen auf dem Spielfeld möglich, jedes der Merkmale zweidimensional (z.B. farbig codiert) darzustellen. Der Wertebereich der Farben reicht dabei von blau (die niedrigste Ausprägung des Merkmales) bis rot (die höchste Ausprägung des Merkmales). Visualisiert man auf diese Weise alle Merkmale, so erhält man eine farbige Karte, aus der die Verteilung der jeweiligen Merkmale, d.h. variablen, visuell erkennbar ist. Dabei ist zu beachten, dass eine Person (bzw. ein Datensatz) unabhängig von dem betrachteten Merkmal genau auf der einen Stelle auf dem Fußballplatz zu stehen kommt.

Zu einer fertigen SOM kann man auch noch weitere Merkmale assoziieren; dabei werden Merkmale der Datensätze, die bei der Berechnung der SOM nicht berücksichtigt werden, grafisch genauso dargestellt wie Merkmale, die in die SOM eingeflossen sind. Die Verteilung der Datensätze innerhalb der SOM ändert sich dabei nicht mehr.

Eine Anwendung von SOM ist in WO 01/80176 A2 beschrieben, wobei dort das Ziel verfolgt wird, eine Gesamtdatenmenge in Teildatenmengen zu teilen, um auf diesen dann Prognose-Modelle zu rechnen. Dabei geht es aber darum, die Performance der Berechnung durch Verteilung der Rechenlast auf mehrere Computer zu steigern. Diesem Verfahren liegen zwar zum Teil auch SOMs zu Grunde, nicht jedoch, um die Prognosequalität zu optimieren, sondern (vordergründig) um durch das verteilte Rechnen und das anschließende Zusammenführen der Einzelmodelle die Berechnungszeit zu verkürzen. Die dabei verwendete Prognosemethode beruht insbesondere auf den sog. "Radial Basis Function (RBF)"-Netzwerken, die mit einer speziellen SOM-Variante verbunden werden, welche die SOM-Repräsentation entropie-optimiert.

Aus der DE 197 42 902 A1 ist weiters eine andere Anwendung der SOM-Methode bekannt, nämlich bei der Planung und Durchführung von Versuchen, wobei hier jedoch speziell eine Prozessüberwachung mit dem Einsatz von SOM, ohne irgendwelche Prognosen, angestrebt wird.

Es ist nun Aufgabe der Erfindung, ein Verfahren bzw. ein System der eingangs angeführten Art vorzusehen, mit dem eine hohe Leistungsfähigkeit sowie eine Optimierung der Genauigkeit der Prognosen erzielbar ist, um so eine hohe Effizienz der darauf basierenden Steuerungsanwendung im jeweiligen operativen System zu ermöglichen; in der Folge sollen dadurch z.B. in Fertigungsprozessen qualitativ hochwertigere Produkte erhalten werden können.

Das erfindungsgemäße Verfahren der eingangs angeführten Art ist dadurch gekennzeichnet, dass zur Berücksichtigung von Nichtlinearitäten in den Daten eine interne Skalierung von Variablen aufgrund des nichtlinearen Einflusses jeder Variablen auf die Prognosevariable vorgenommen wird, dass den Knoten zugeordnete lokale rezeptive Bereiche ermittelt werden, auf deren Basis lokale lineare Regressionen berechnet werden, und dass anhand der so erhaltenen Menge lokaler Prognosemodelle optimierte Prognosewerte für die Steuerung des operativen Systems berechnet werden, indem für jeden neuen Datensatz der jeweils adäquate Knoten bestimmt und das lokale Prognosemodell auf diesen Datensatz angewandt wird.

In entsprechender Weise ist das erfindungsgemäße System der eingangs angegebenen Art dadurch gekennzeichnet, dass der SOM-Einheit eine Nichtlinearitäts-Rückkopplungseinheit zur internen Skalierung von Variablen zum Ausgleich ihres nichtlinearen Einflusses auf die Prognosevariable sowie eine Berechnungseinheit für die Ermittlung von lokalen linearen Regressionen auf der Basis von den Knoten zugeordneten, lokalen rezeptiven Bereichen zugeordnet sind, wobei in einer Prediktionseinheit auf der Basis der so erhaltenen lokalen Prognosemodelle optimierte Prognosewerte berechnet werden, indem für jeden neuen Datensatz der jeweils adäquate Knoten bestimmt und das lokale Prognosemodell auf diesen Datensatz angewandt wird.

Gemäß der Erfindung wird somit zunächst der Datenraum in "Mikrocluster" zerlegt, und danach wird ein jeweils möglichst homogenes, optimales Gebiet um diese Cluster für die Regression bestimmt. In allen diesen Gebieten werden anschließend unterschiedliche lokale Regressionen berechnet, die dann einzeln für jeden Datensatz, für den es eine Prognose zu errechnen gilt, angewandt werden, je nachdem, in welchem Mikrocluster er zu liegen kommt bzw. welchem er angehört.

Die besondere Leistungsfähigkeit der vorliegenden Prognosetechnik wird demgemäß durch die Anpassung klassischer statistischer Methoden, wie Regressionsanalyse, Hauptkomponentenanalyse, Clusteranalyse, auf die speziellen Gegebenheiten der SOM-Technologie erreicht. Mit der lokalen linearen Regression wird die statistische Regressionsanalyse jeweils nur auf einen Teil der Daten angewandt, wobei dieser Teil durch die SOM bestimmt wird, d.h. durch die "Nachbarschaft" in der SOM-Karte. Innerhalb dieser Teilmenge kann ein Regressionsmodell erstellt werden, das wesentlich spezifischer ist als ein einziges Modell über alle Daten. Insgesamt werden für ein Prognosemodell viele lokale Regressionsmodelle mit überlappenden Datenteilmengen erzeugt. Bei der Bestimmung eines Prognosewertes wird immer nur das "nächstgelegene" Modell verwendet.

Die vorliegende Technik kombiniert somit die Fähigkeit der Self-Organizing Maps (SOM) zur nichtlinearen Daten-Repräsentation mit dem Kalkül der multivariaten Statistik, um die Effizienz der Prognosemodelle zu steigern und den Einsatz differenzierter, verteilter Prognosemodelle in automatisierten Steuerungssystemen zu optimieren. Dabei werden die Schwierigkeiten der bekannten Lösungsvorschläge überwunden, indem von einem rein methodischen Ansatz Abstand genommen wird. Die Funktion integrierter Prognosemodelle - insbesondere ihre automatisierte Anwendung in Steuerungsprozessen - wird in einzelne Wirkungsbereiche zerlegt, die unabhängig gelöst und schließlich neuartig in ein funktionales Ganzes gefügt werden.

Bei der Erfindung wird auch - anders als beim Stand der Technik - dem Umstand Rechnung getragen, dass einzelne Variable einen unterschiedlichen, nichtlinearen Einfluss auf die Prognosevariable haben können; um diesen Nichtlinearitäten in den Daten Rechnung zu tragen und eine zumindest weitgehende Kompensation hiefür vorzusehen, wird auf Basis einer globalen Regression in Verbindung mit lokalen Vorhersagemodellen eine Nichtlinearitätsanalyse durchgeführt, wobei Nichtlinearitätsmaße hergeleitet werden, aus denen Skalierungsfaktoren für eine interne Skalierung zwecks Berücksichtigung der gegebenen nichtlinearen Zusammenhänge ermittelt werden. Nach Durchführung dieser internen Skalierung wird die optimierte SOM-Repräsentation erzeugt.

In diesem Zusammenhang ist es von besonderem Vorteil, wenn für jede Variable eine Maßzahl für ihre Ordnung in der SOM-Repräsentation sowie eine Maßzahl für ihren Beitrag zur erklärten Varianz gebildet wird, wobei aus diesen Maßzahlen neue interne Skalierungen auf der Basis ermittelt werden, dass die geschätzte Änderung der erklärten Varianz durch Variation der internen Skalierungen maximiert wird, wodurch die variablen in der resultierenden SOM-Repräsentation entsprechend ihren Beiträgen zur erklärten Varianz geordnet und so die vorhandenen Nichtlinearitäten genauer aufgelöst werden.

Bei der Ermittlung der jeweiligen rezeptiven Bereiche (bzw. rezeptiven Radien, die diese Bereich definieren) ist ein gewisser Spielraum gegeben, der durch die notwendige Signifikanz einerseits und die erforderliche Stabilität andererseits begrenzt wird. Innerhalb dieser Grenzen kann ein optimaler rezeptiver Bereich gefunden werden, für den die Varianz der Residuen minimal ist. Von Vorteil ist es daher erfindungsgemäß im Besonderen, wenn bei der Ermittlung der den Knoten zugeordneten rezeptiven Bereiche deren Größe jeweils so groß gewählt wird, dass die erklärte Varianz der lokalen Regression bei gleichzeitiger Sicherstellung der Signifikanz und Stabilität im Bereich des Knotens maximal ist. Dabei ist es insbesondere günstig, wenn bei der Ermittlung der den Knoten zugeordneten rezeptiven Bereiche jeweils der für die Signifikanz der Regression kleinstnotwendige, für die Maximierung der Prognosegenauigkeit größtmögliche rezeptive Bereich gewählt wird.

Als vorteilhaft hat es sich auch erwiesen, wenn die interne Skalierung iterativ durchgeführt wird.

Es ist erfindungsgemäß weiters von Vorteil, wenn zum zumindest teilweisen Ausgleichen etwaiger Korrelationen zwischen Variablen die zugeführten Daten vorab einer kompensierenden Skalierung unterworfen werden. Auf diese Weise werden für die weitere Verarbeitung gut verwendbare Startwerte erhalten. Dabei hat es sich als günstige Vorgangsweise erwiesen, wenn zur kompensierenden Skalierung die einzelnen Datensätze reskaliert werden, wobei die Werte einer jeweiligen Variablen aller Datensätze standardisiert werden, wonach die Daten in den Hauptkomponentenraum transformiert werden und die kompensierenden Skalierungen für die einzelnen Variablen auf der Basis berechnet werden, dass sich das Distanzmaß im ursprünglichen Variablenraum vom Distanzmaß im Hauptkomponentenraum minimal unterscheidet. Weiters ist es in der Folge auch zwecks Verfahrensvereinfachung vorteilhaft, wenn die kompensierende Skalierung mit der die Nichtlinearitäten in den Daten berücksichtigenden internen Skalierung multiplikativ zu einer kombinierten Variablen-Skalierung verknüpft wird, die einer demgemäß modifizierten SOM-Repräsentation zugrunde gelegt wird.

Für die jeweilige Prozesssteuerung ist eine spezielle Ausführungsform des erfindungsgemäßen Systems von Vorteil, die dadurch gekennzeichnet ist, dass an die Prediktionseinheit mehrere, einzelnen Prozesszuständen zugeordnete Steuereinheiten anschließen, die Prozessergebnisse prognostizieren, die bei den aktuellen Prozessdaten entstehen würden.

Auch ist es hier günstig, wenn an die Steuereinheiten jeweils gesondert zugeordnete Prozesseinheiten zur Herleitung von Steuerparametern auf Basis der prognostizierten Prozessergebnisse und der Sollwerte für den jeweils im operativen System durchzuführenden Prozess anschließen.

Die Erfindung wird nachfolgend anhand von besonders bevorzugten Ausführungsbeispielen, auf die sie jedoch nicht beschränkt sein soll, und unter Bezugnahme auf die Zeichnung noch weiter erläutert. Es zeigen:

Fig. 1 schematisch, in einer Art Blockschaltbild, ein System zur Erstellung von Prognosen, wobei insbesondere das Zusammenarbeiten der einzelnen Komponenten dieses Prediktions-Systems veranschaulicht wird;

Fig. 2 eine schematische Darstellung einzelner Systemmodule mehr im Detail;

Fig. 3 ein Ablaufschema zur Veranschaulichung der Vorgangsweise beim erfindungsgemäßen Verfahren;

Fig.4 ein Diagramm zur Veranschaulichung der mittleren Reichweite in Abhängigkeit vom rezeptiven Radius, für verschiedene Variablen;

Fig.5 schematisch für eine Dimension einen rezeptiven Bereich für eine lokale lineare Regression;

die Fig.6 und 7 zwei Diagramme für das nichtlineare Bestimmtheitsmaß bzw. den geschätzten Fehler in Abhängigkeit vom rezeptiven Radius zur Ermittlung des optimalen rezeptiven Radius;

Fig.8 schematisch eine Darstellung des erfindungsgemäßen Systems in einer Anwendung bei einer Prozesssteuerung, in einer Art Blockschaltbild;

Fig.9 in den Teilfiguren 9A, 9B und 9C SOM-Repräsentationen für verschiedene Variablen in einem beispielhaften Stahl-Strangguss-Prozess;

Fig.10 in den Teilfiguren 10A, 10B und 10C entsprechende SOM-Karten nach Durchlaufen eines zweiten Iterationsschritts;

Fig.11 für eine der Variablen die SOM-Repräsentation nach einem weiteren Iterationsschritt, wobei die Datenordnung (Fig.11A), der nichtlineare Einfluss (Fig.11B) und die Verteilung der rezeptiven Radien (Fig.11C) gezeigt sind; und

Fig.12 ein Diagramm, das die Änderung der Parameter aufgrund der Iterationen veranschaulicht.

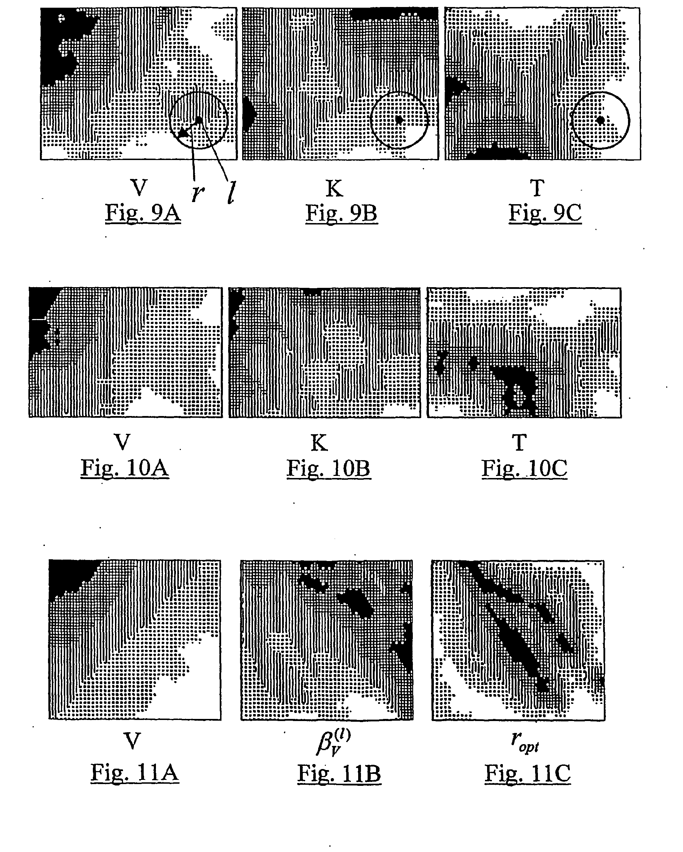

Es ist bekannt, dass in der SOM-Darstellung Daten so dargestellt werden können, dass bestimmte Eigenschaften der Datenverteilung aus der SOM-Karte unmittelbar gesehen werden können. Die SOM-Karte enthält dabei zwecks visualisierung ein nach vorgegebenen Vorschriften geordnetes Raster von Knoten, z.B. in hexagonaler Form, wobei die Knoten des Rasters die jeweiligen Mikrocluster der Datenverteilung repräsentieren. Ein Beispiel hiefür ist in den nachstehenden noch näher erläuterten Figuren 9, 10 und 11 veranschaulicht.

Beim vorliegenden Verfahren werden nun in der SOM-Darstellung große Datenmengen so verdichtet, dass die nichtlinearen Zusammenhänge in der Repräsentation erhalten bleiben. Hierdurch werden jene Datensektoren (Mikrocluster), welche die für die Modellbildung relevanten Informationen enthalten, einzeln und unabhängig selektierbar. Die extrem kurzen Zugriffszeiten auf diese Datensektoren ermöglichen eine wesentlich differenziertere Unterteilung der Datenbasis und dadurch eine gezielte Nutzung der enthaltenen Nichtlinearitäten für die Modellerstellung.

Die Verknüpfung des statistischen Kalküls mit geeignet selektierten Datensektoren gestattet in der Folge die Nutzung der in den nichtlinearen Zusammenhängen vorhandenen Informationen bei gleichzeitiger Sicherstellung statistischer Qualitäts- und Signifikanzanforderungen. Die Selektion der lokalen Datensektoren, also der rezeptiven Bereiche, wird hierbei auf die Gewinnung möglichst effizienter Prognosemodelle hin optimiert.

Aus der Menge aller optimierten lokalen Regressionsmodelle kann eine Aussage darüber getroffen werden, inwieweit die zugrunde liegende Datenrepräsentation geeignet ist, die nichtlinearen Zusammenhänge der Variablen mit der Zielgröße zu repräsentieren (Nichtlinearitätsanalyse). Hieraus lassen sich in einem iterativen Schritt die Repräsentationsparameter der SOM-Datenverdichtung (d.h. interne Skalierungen), im Sinne einer verbesserten Auflösungskraft für die Nichtlinearitäten optimieren, was in der Folge zu noch genaueren lokalen Prognosemodellen führt.

Die besondere Art der SOM-Datenrepräsentation erlaubt sodann die Visualisierung aller lokalen Modellparameter in einem Bild. Durch die simultane Gegenüberstellung qualitätsrelevanter Parameter wird die Sicherstellung der Validität und Effizienz des gesamten Prognosemodells erleichtert, beschleunigt und verbessert.

Das Prognosemodell als Ganzes umfasst die Menge aller lokalen Prognosemodelle, die als logisch oder physisch verteilt zu betrachten sind. Im Einsatzmodus des Prognosemodells wird jeder neue Datensatz zunächst jenem Mikrocluster zugeordnet, der ihm am nächsten liegt. Hierauf wird das lokale Prognosemodell dieses Mikroclusters auf den Datensatz angewandt und das erhaltene Prognoseergebnis der - vorzugsweise lokalen - Steuer- oder Verarbeitungseinheit zugeführt.

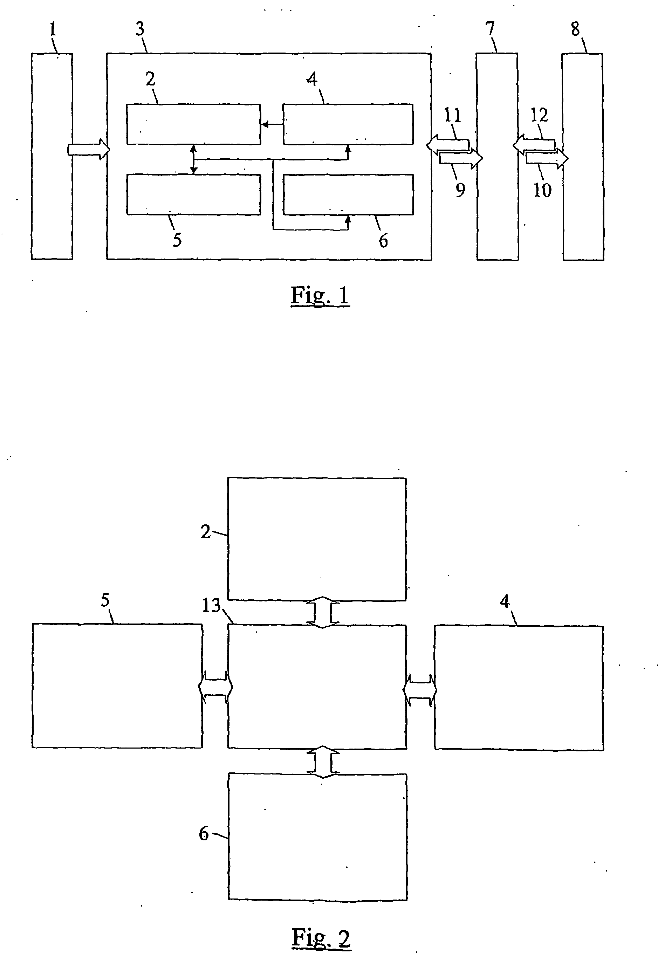

Die spezifische SOM-Datenrepräsentation bzw. Datenverdichtung nimmt eine zentrale Stellung im vorliegenden Verfahren ein. Die gemäß der Darstellung in Fig. 1 in einer Datenbank 1 gespeicherten historischen Prozessdaten dienen zur in einer SOM-Einheit 2 innerhalb einer Prediktionseinheit 3 durchgeführten SOM-Generierung in einem ersten Iterationsschritt des Verfahrens. Basierend auf dieser SOM werden als Ergebnis einer in einer Einheit 4 durchgeführten Nichtlinearitätsanalyse neu errechnete Skalierungen zur SOM-Einheit 2, d.h. auf die Datenrepräsentation, in einem zweiten Iterationsschritt rückgekoppelt. Diese Skalierungen optimieren die SOM-Datenrepräsentation im Hinblick auf die optimale Berücksichtigung nichtlinearer Zusammenhänge in den Daten für die Prediktion über den lokalen Datensektoren, wie nachstehend noch näher erläutert werden wird.

Die Erstellung von lokalen linearen Regressionsmodellen erfolgt in einer Berechnungseinheit 5 unter der Berücksichtigung eines rezeptiven Radius, der für das jeweilige Regressionsmodell optimal hinsichtlich der Prognosequalität gewählt wird. Mit Hilfe des rezeptiven Radius wird festgelegt, wie viele Datensätze aus der Umgebung eines Mikroclusters für die Regression verwendet werden. Je größer der Radius ist, desto mehr Datensätze aus den umliegenden Knoten weren verwendet: Wenn der Radius gegen "unendlich" geht, werden alle Datensätze verwendet. Die weiter entfernten Knoten haben aufgrund von dabei vorzugsweise verwendeten Gauß'schen Gewichtungsfunktionen einen geringeren Einfluss.

Die Gesamtheit aller lokalen linearen Regressionsmodelle über den Datensektoren in Kombination mit der SOM stellt das optimierte Prognose-Modell dar. Dieses Gesamtmodell kann mittels einer Visualisierungseinheit 6 optisch dargestellt werden, und es kann, wie nachstehend anhand der Fig. 8 noch näher erläutert wird, ggf. auf einzelne Sub-Steuereinheiten verteilt und dazu benutzt werden, aus aktuellen Prozessdaten für die jeweiligen Steuereinheiten spezifische Prognosen hinsichtlich der Prozessergebnisse zu erstellen, die dann zur Steuerung dieser Prozesseinheiten verwendet werden.

In Fig. 1 ist hier der Einfachheit halber nur eine allgemeine Steuereinheit 7 veranschaulicht, die mit einer allgemeinen Prozesseinheit 8 in Verbindung steht. Mit einem Pfeil 9 ist die in Echtzeit erfolgende Prozessdaten-Übermittlung - zwecks Anwendung auf laufende Prozessdaten - veranschaulicht, und Pfeil 10 zeigt den Strom von Steuerdaten an; mit Pfeilen 11, 12 ist schließlich die Zuführung von laufenden Prozessdaten zu den jeweils vorhergehenden Einheiten veranschaulicht.

In Fig. 2 ist zur Verdeutlichung das Zusammenwirken der einzelnen Systemkomponeriten im Detail veranschaulicht. Dabei ist zu ersehen, dass die SOM-Einheit 2, die zur Datenrepräsentation und -verdichtung vorgesehen ist, über einen Kern 13 der Prediktionseinheit 3 mit den anderen Einheiten, wie insbesondere der Nichtlinearität-Rückkopplungseinheit 4, in Verbindung steht, von wo die Resultate der lokalen Modellierung auf die Datenrepräsentation rückgekoppelt werden, um sodann in der Berechnungseinheit 5 die optimierten linearen Regressionsmodelle über lokalen Datensektoren zu erstellen. Die Visualisierungseinheit 6 zeigt dann die so erstellte SOM-Karte an und ermöglicht auch eine visuelle Kontrolle.

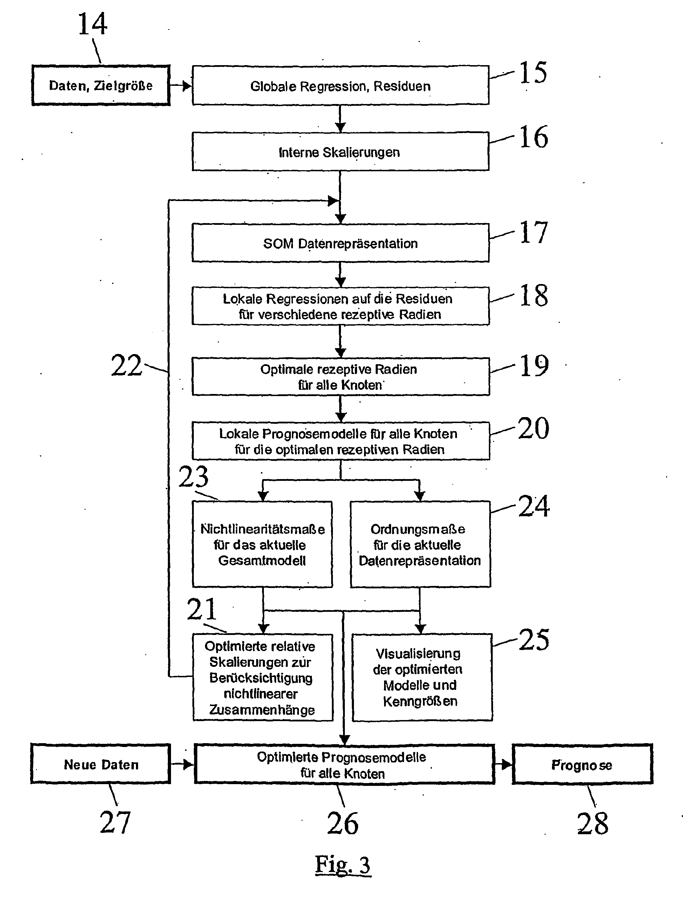

In Fig.3 ist der Ablauf der erfindungsgemäßen Technik schematisch veranschaulicht, wobei bei Block 14 die Datenarchivierung und Zielgrößen-Vorgabe veranschaulicht sind. In einem ersten Schritt (s. Block 15 in Fig.3) erfolgt in an sich herkömmlicher Weise auf Basis dieser Daten eine Berechnung einer globalen Regression bzw. von Residuen, wonach gemäß Block 16 interne Skalierungen für die Gewinnung der SOM-Repräsentation festgelegt werden.

Im Einzelnen geht jede Daten-basierte Prognose von einer Verteilung von Rohdaten aus, die aus K Punkten $x_{k,j}^0$ (mit k=1...K) be steht, wobei jeder Punkt j Komponenten (mit j=1...L) besitzt. Abgestellt wird die Prognose auf eine Zielgröße $y_k$, die im Allgemeinen nichtlinear von den Punkten $x_{k,j}^0$ abhängt und in statistischem Sinn eine Zufallsvariable ist. Die Variablen $x_j^0$ (der Index k wird der Einfachheit halber im Weiteren weggelassen) mit der Varianz

$$\sigma_j^{0^2} = Var(x_j^0)$$

werden bei der vorliegenden Technik zunächst standardisiert und dann (gemäß Schritt 16 in Fig.3) mit neuen Faktoren gemäß folgender Beziehung skaliert, wobei diese Faktoren interne Skalierungen $\sigma_j$ genannt werden: Die im Folgenden verwendeten Variablen sind somit

$$x_j := \sigma_j \cdot \frac{x_j^0 - \overline{x_j^0}}{\sigma_j^0} .$$

Die Kovarianzmatrix C der skalierten Variablen $x_j$ kann immer durch eine orthogonale Matrix $A_{iq}$ (mit i=1...L und q=1...Q) diagonalisiert werden:

$$C_{ij} := \frac{1}{K-1} \sum_{k=1}^{K} x_{k,i} \cdot x_{k,j}$$

wobei

$$C = A \cdot C^{diag} \cdot A^T$$

und für die Eigenwerte $E_q$

$$E_q = (C^{diag})_{qq}$$

gilt.

Die Kovarianzmatrix C kann weiters zerlegt werden als

$$C = B \cdot B, \quad mit \cdot B_{ij} = \sum_{q=1}^{Q} A_{iq} \sqrt{E_q} A_{jq} .$$

Mittels der Transformationsmatrix $A_{iq}$ werden die Komponenten $x_j$ des Datenvektors $\vec{x}$ in den Hauptkomponentenraum transformiert: $x_q' = \sum_{j=1}^{L} A_{jq} \cdot x_j$ mit q=1...Q... Anzahl der Hauptkomponenten.

Gemäß Block 17 in Fig.3 erfolgt nun eine Berechnung zur SOM-Datenrepräsentation.

Die Generierung einer SOM erfolgt in an sich bekannter Weise nach dem Kohonen-Algorithmus (Teuvo Kohonen, Self-Organizing Maps, Springer Verlag 2001). Die nichtlineare Repräsentation der Datenverteilung $\vec{x}_k \cong x_{k,j}$ durch eine SOM hängt dabei wesentlich von den internen Skalierungen $\sigma_j$ der Variablen $x_j$ ab. Eine Multiplikation der internen Skalierungen $\sigma_j$ mit frei bestimmbaren Faktoren $\pi_j$ ändert somit die Datenrepräsentation, die sich aus den neuen Skalierungen ergibt, und zwar gemäß $\sigma'_j = \sigma_j \cdot \pi_j$.

Die SOM-Datenrepräsentation kann dazu benutzt werden, Teilbereiche von Daten zu definieren. Besteht eine SOM aus N Knoten mit repräsentierenden Vektoren $\vec{m}_1$ wobei l=1...N, so kann eine Teilmenge von Daten dadurch ausgewählt werden, dass sie innerhalb eines rezeptiven Radius r um einen bestimmten Knoten l liegt:

$$\{\vec{x}_{k_l}\}: \quad \left|\vec{x}_{k_l} - \vec{m}_{l'}\right| = \min_{l'} \text{ und } l' \in U_r(l), \ k_l = 1...K_l$$

wobei

$\vec{m}_{1,'}$ = repräsentierender Vektor des Knoten l' und

$U_r = \{l'\}$ ... Umgebung des Knoten l, wobei gilt: $\|l - l'\| \leq r$ .

Die einzelnen Variablen $x_j$ werden in einer gegebenen SOM-Datenrepräsentation unterschiedlich gut aufgelöst. Die Ordnung der SOM in Bezug auf die Variablen $x_j$ wird im vorliegenden Verfahren für einen vorgegebenen, rezeptiven Radius r durch die mittlere Reichweite $\lambda_j$ beschrieben:

$$\lambda_j^2(r) := \frac{\overline{s_j^2(r)}}{s_j^2}, \text{mit} \quad s_j^2 := \sigma_j^2(K-1)$$

und

$$\overline{s_j^2(r)} := \sum_{l=1}^{N} \sigma_j^{2(l)} \cdot (K_l - 1) \cdot \frac{H_l}{K_l},$$

wobei

$H_l$ die Anzahl der Datensätze im Knoten l,

$\sigma_j^{2(1)}$ die Varianz der Variablen $x_j$ in der lokalen Datenmenge

$\{\vec{x}_{k_l}\}$ und

$\frac{H_1}{K_1}$ ein Gewichtungsfaktor für den Knoten l ist.

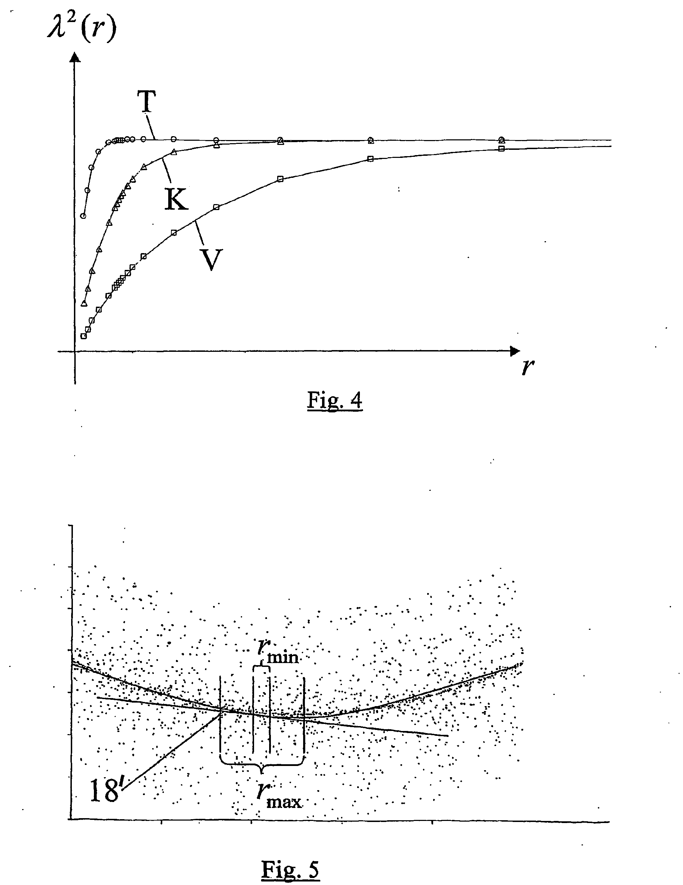

In Fig.4 ist beispielhaft in einem Diagramm das Quadrat der mittleren Reichweite $\lambda^2$ (r) in Abhängigkeit vom rezeptiven Radius r für verschiedene Variable V,K und T veranschaulicht, wobei hier das nachstehend noch näher erläuterte Beispiel eines Stahl-Stranggusses zugrundeliegt, bei dem die Abhängigkeit der Zielgröße "Zugfestigkeit" von den Parametern Strang-Abzugsgeschwindigkeit V, Abzugstemperatur T und Konzentration K von Chrom in der Legierungszusammensetzung angenommen ist und auf Basis von V-, T- und K-Daten Vorhersagen betreffend die Stahlqualität (konkret die Zugfestigkeit) zu treffen sind.

Für den - über alle Knoten gemittelten - Reichweite-Wert $\overline{\lambda_j^2}$ gilt bei festem rezeptivem Radius $r_l$ ersichtlich:

$\lambda_j \to 0$ ... Vollständige Ordnung der SOM innerhalb des rezeptiven Radius $r_l$ hinsichtlich der Variable $x_j$

$\lambda_j \to 1$ ... Vollständiger Informationsverlust für lokale Regressionen nach der Variablen $x_j$ innerhalb des rezeptiven Radius $r_l$ bezüglich globaler Nichtlinearitäten in $x_j$.

Um ohne weitere Voraussetzungen eine möglichst ausgewogene SOM als Startpunkt für die nachfolgenden Schritte zu gewinnen, können die internen Skalierungen vorzugsweise durch eine Methode festgelegt werden, die geeignet ist, etwaige Korrelationen in der Datenverteilung zu kompensieren.

Diese kompensierenden Faktoren $\pi_j^{comp}$ für jede Variable j werden so berechnet, dass das Distanzmaß im gegebenen Datenraum dem Distanzmaß im standardisierten Hauptkomponentenraum (Mahalanobis-Distanz) möglichst nahe kommt. Dies ist erfüllt, wenn:

$$\pi_j^{comp} = \frac{1}{C_{jj}} \sum_{q=1}^{Q} \left( A_{jq}^2 \cdot \sqrt{E_q} \right).$$

Alternativ oder zusätzlich zu diesen Faktoren können Startwerte für die Skalierungen auch aus vorhergehenden univariaten Nichtlinearitätsanalysen der Residuen verwendet werden.

Eine Regression aller K Datenpunkte auf die Zielgröße y wird hier als globale Regression (vgl. Schritt 15 in Fig.3) bezeichnet. Die geschätzten Regressionskoeffizienten $\beta_o$, $\beta_j$ für den Schätzer $\hat{y}$ der Zielgröße y, mit

$$\hat{y}_k = \beta_0 + \beta_j \cdot x_{k,j}$$

werden auf konventionelle Weise (vgl. z.B. die sog. schrittweise Regression-Methode oder die vollständige Regressions-Methode) auf Basis der Kovarianzmatrix C berechnet.

Die Residuen $u_k$ der globalen Regression ergeben sich zu

$$u_k = y_k - \hat{y}_k$$

Auf Basis einer SOM-Repräsentation kann nun für jede Teilmenge an Datenpunkten $\{x_{k_l}(r_1)\}$, die innerhalb eines rezeptiven Radius $r_1$ um den Knoten l liegt, eine lokale Regression auf das Residuum $u_{k_l}$ berechnet werden, vgl. Schritt 18 in Fig.3. Falls zwischen der Zielgröße y und den Variablen $x_j$ ein nichtlinearer Zusammenhang besteht, die SOM-Repräsentation unabhängig von der Zielgröße y erstellt wurde, und die lokale Regression in Bezug auf die Variablen $X_j$ signifikant ist, so kann durch sie ein Teil der (global unerklärt gebliebenen) Streuung im Residuum u erklärt werden.

Ein vereinfachtes Beispiel für eine solche lokale lineare Regression ist in Fig.5 gezeigt, wo eine vielzahl von Datenpunkten sowie eine - nicht näher bezeichnete - gesamte Regressionskurve gezeigt sind, und wobei ersichtlich ist, dass der rezeptive Radius r, der den rezeptiven Bereich für die Regression definiert, zwischen einem Minimum $r_{min}$ und einem Maximum $r_{max}$ festgelegt werden kann; diese Grenzen $r_{min}$, $r_{max}$ sind durch die Signifikanz bzw. Linearität des lokalen Modells gegeben. Die lokale Regressionsgerade ist mit 18' bezeichnet.

Das erhaltene lokale Regressions-Modell ist gültig für alle Datensätze, die im rezeptiven Bereich des jeweiligen Knoten l liegen; die beste Prognose-Genauigkeit für neue Datensätze besteht im Allgemeinen im Zentrum des Bereichs, das sind jene H Datensätze, die dem repräsentierenden Vektor $\vec{m}_l$ euklidisch am nächsten liegen (d.h. jene, die zu dem Knoten l "gehören"). Hiefür gilt:

$$l = \underset{l'}{\arg\min} \left| \vec{x} - \vec{m}_{l'} \right|.$$

Die lokalen Regressions-Modelle können wiederum auf Basis der lokalen Kovarianzmatrizen $C^{(l)}$

$$c_{ij}^{(l)} = \frac{1}{K_l - 1} \sum_{k_l=1}^{K_l} \left( x_{k_l}^i - \overline{x}_{(l)}^i \right) \cdot \left( x_{k_l}^j - \overline{x}_{(l)}^j \right)$$

auf die lokalen Residuen berechnet werden:

$$\hat{u}_{k_l} = \beta_0^{(l)} + \beta_j^{(l)} x_{k_l, j}.$$

Die rezeptiven Bereiche können vorzugsweise auch Gauss-gewichtet gebildet werden, woraus gewichtete Mittelwerte, Varianzen und Freiheitsgrade resultieren. Der Einfachheit halber wird auf diese Detaillierung im Weiteren verzichtet.

Für jede Menge gegebener rezeptiver Radien $r_l$ zu den Knoten l, mit l=1...N, können nun über der SOM-Repräsentation die lokalen Regressionen (gemäß Schritt 18 in Fig.3) ermittelt werden. Dabei lassen sich die folgenden an sich bekannten Quadratsummen bilden:

$$s_0^{2(l)} := \sum_{k_l=1}^{K_l} u_{k_l}^2 = s_{total}^{2(l)} + K_l^2 \cdot \overline{u}^{2(l)} \cdots$$

gesamte Quadratsumme des globalen Residuums im rezeptiven Bereich;

$$\overline{u}^{(l)} := \frac{1}{K_l} \sum_{k_l} u_{k_l} \qquad \cdots$$

Mittelwert des globalen Residuums innerhalb r(l), auch Offset genannt;

$$s_{total}^{2(l)} := \sum_{k_l} (u_{k_l} - \overline{u}^{(l)})^2 \qquad \cdots$$

Quadratsumme des globalen Residuums relativ zum lokalen Mittelwert;

$$s_M^{2(l)} := s_g^{2(l)} + s_h^{2(l)} \qquad \cdots$$

gesamte erklärte Quadratsumme im lokalen Residuum;

$$s_g^{2(l)} := \sum_{k_l} (\hat{u}_{k_l} - \overline{u}^{(l)})^2 \qquad \cdots$$

durch die lokale Regression erklärte Quadratsumme;

$$s_h^{2(l)} := K_l \cdot \overline{u}^{2(l)} \qquad \cdots$$

durch den Offset erklärte Quadratsumme;
und

$$s_R^{2^{(l)}} := \sum_{k_l} (u_{k_l} - \hat{u}_{k_l})^2 \qquad \ldots$$

unerklärte Quadratsumme, Residuum 2. Ordnung.

Für die erwartungstreuen Schätzer der erklärten Quadratsummen gilt (vgl. Kmenta, J. "Elements of Econometrics", 2. Auflage, 1997, University of Michigan Press, Ann Arbor):

$$\hat{s}_g^{2^{(l)}} = s_{total}^{2^{(l)}} - s_R^{2^{(l)}} \cdot \frac{K_l - 1}{K_l - J_l - 1}$$

$$\hat{s}_h^{2^{(l)}} = s_h^{2^{(l)}} - s_R^{2^{(l)}} \cdot \frac{1}{K_l - J_l - 1} \quad .$$

$J_l$ ist die Anzahl der Regressoren für die jeweilige lokale Regression mit dem rezeptiven Radius $r_l$ um den Knoten l. Damit die Regression einen Anteil der gesamten Quadratsumme des Residuums signifikant erklärt, muss ein Overall-Test für die an sich bekannte Testgröße F* wie folgt erfüllt sein:

$$F^\bullet = \frac{s_g^2 + s_h^2}{s_R^2} \cdot \frac{K - J - 1}{J + 1} > F_{1-\alpha, J+1, K-J-1}$$

für jedes $K \equiv K_l$, $J \equiv J_l$.

Eine vollständige Menge von lokalen Regressionen über der SOM-Repräsentation auf das Residuum u wird im Folgenden als Gesamtmodell (der lokalen Regressionen) bezeichnet.

Als entscheidende Größe für die Erklärungskraft des Gesamtmodells kann das nichtlineare korrigierte Bestimmtheitsmaß $R_{NL}^2$ angesehen werden, das sich aus den Beiträgen der gewichteten, geschätzten erklärten Varianzen der einzelnen lokalen Regressionen wie folgt zusammensetzt:

$$R_{NL}^2 := \frac{\overline{\hat{s}_M^2}}{s_0^2} .$$

Die Aufsummierung der lokalen Beiträge zu einem Gesamtwert erfolgt vorzugsweise gewichtet mit der Zahl der Datensätze $H_l$, die dem jeweiligen Knoten l zugeordnet sind, z.B.

$$\overline{\hat{s}_M^2} := \sum_{l=1}^{N} \frac{H_l}{K_l} \cdot \hat{s}_M^{2^{(l)}} .$$

Wesentliche Faktoren, von denen die Erklärungskraft des Gesamtmodells abhängt, sind:

a) die Bestimmung optimaler rezeptiver Radien $r_l$ für die lokalen Regressionen;
b) die Ermittlung einer SOM-Datenrepräsentation, welche die nichtlinearen Zusammenhänge gut auflöst; und
c) die Verbindung von a) und b) so, dass die Erklärungskraft des Gesamtmodells maximal wird.

Die Prognosegenauigkeit des Gesamtmodells hängt (für eine feste, vorgegebene SOM-Datenpräsentation) wesentlich von der Wahl der rezeptiven Radien $r_l$ ab. Gemäß Schritt 19 in Fig.3 werden daher nunmehr optimale rezeptive Radien $r_l$ für alle Knoten l ermittelt, wodurch dann gemäß Schritt 20 die gewünschten lokalen Prognosemodelle für alle Knoten, für die optimalen rezeptiven Radien $r_l$, erhalten werden.

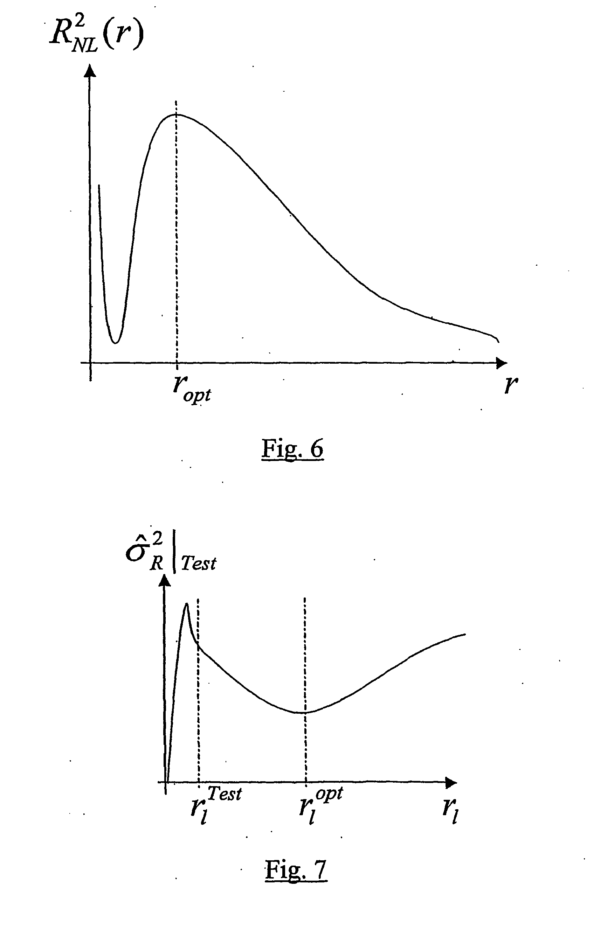

Die optimalen Werte $r_{opt}$ für die rezeptiven Radien $r_l$ können vorzugsweise dadurch bestimmt werden, dass unter gleichzeitiger Variation aller rezeptiven Radien $r_l = r$ der Wert von $R_{NL}^2$ maximiert wird, vgl. auch die Darstellung in Fig.6, wo das Maximum in einer typischen Kurve von $R_{NL}^2$ (r) beim Radius $r_{opt}$ gezeigt ist.

Alternativ dazu kann $r_1$ auch für jeden Knoten l individuell bestimmt werden, indem der geschätzte Fehler $\hat{\sigma}_{R|Test}^2$ im Bereich einer Testmenge um den Knoten l minimiert wird. Diese Alternative ist wieder beispielhaft im schematischen Diagramm von Fig.7 gezeigt, wo bei einem typischen Kurvenverlauf für $\hat{\sigma}_{R|Test}^2$ ein Minimum beim Radius $r_l^{opt}$ veranschaulicht ist.

Für diese Alternative für die Ermittlung des jeweiligen rezeptiven Radius $r_l^{opt}$ muss zuvor eine Testmenge vom Radius $r_l^{Test}$ um den jeweiligen Knoten l bestimmt werden, die groß genug ist, um den Fehler im Bereich des Knotens l signifikant zu schätzen. Dazu wird vorzugsweise gefordert, dass auf Basis dieser Menge selbst ein lokales, signifikantes Regressionsmodell auf das Residuum u gebildet werden kann und der relative Fehler in der Schätzung der erklärten Varianz σ für diese Menge ein vorgegebenes Ausmaß nicht überschreitet (sog. Overfitting-Test).

Ein erwartungstreuer Schätzer für den Fehler der Regression im Bereich einer (zentralen) Testmenge ist:

$$\hat{\sigma}_R^2\big|_{Test} := \frac{K_l}{H_l} \cdot \frac{1}{K_l - J_l - 1} \cdot \sum_{k_l=1}^{H_l} (u_{k_l} - \hat{u}_{k_l})^2 \ .$$

Die so in $r_l^{opt}$ gebildeten, lokalen Prognosemodelle führen zu einer besonders guten Erklärungskraft des Gesamtmodells.

Die Erklärungskraft des Gesamtmodells hängt weiters wesentlich davon ab, wie gut in der Datenrepräsentation durch die SOM der nichtlineare Einfluss aller einzelnen Variablen $x_j$ auf die Zielgröße y (bzw. auf das Residuum u) für die lokalen Regressionen unterscheidbar wird. Es ist nun somit eine günstige SOM-Datenrepräsentation zu bestimmen.

Durch die gezielte Variation der internen Skalierungen $\sigma_j$ (vgl. auch Schritt 21 in Fig.3, mit der Iterations-Rückkopplungsschleife 22) kann die Datenrepräsentation so beeinflusst werden, dass jene Variablen, die große Beiträge zu $R_{NL}^2$ leisten, durch die SOM stärker "geordnet" werden, und ihr nichtlinearer Einfluss auf $R_{NL}^2$ besser berechenbar und somit optimierbar wird.

Hierzu sollte - zumindest näherungsweise - bekannt sein,

a) wie die nichtlinear erklärte Varianz, also das nichtlineare korrigierte Bestimmungsmaß $R_{NL}^2$, durch einzelne Variable bestimmt ist, vgl. auch Schritt 23 in Fig.3;
b) wie sich die Ordnung der Variablen $x_j$ in der SOM auf die durch die Variablen $x_j$ erklärbare Varianz auswirkt; vgl. Schritt 23 in Fig.3; und
c) wie die Ordnung der Variablen $x_j$ von den internen Skalierungen $\sigma_i$ abhängt (vgl. Schritt 24 in Fig.3).

Die Zuordnung der erklärten Varianz $\hat{S}_g^2$ {genauer: der erklärten Quadratsumme} einer linearen Regression zu einzelnen Variablen erfolgt vorzugsweise durch folgende Zerlegung. Es wird angenommen, dass die erklärte Quadratsumme der Grundgesamtheit

$$s_g'^2 = \vec{\beta}' \cdot C \cdot \vec{\beta}' \cdot (K - 1)$$

ist.

Durch die Zerlegung der Kovarianzmatrix $C = B^2$ (vgl. oben), kann die erklärte Quadratsumme $s_g'^2$ in eine symmetrische Quadratsumme nach Komponenten aufgeteilt werden:

$$s_g'^2 = \sum_{j=1}^{L} s_{g,j}'^2 := (K-1)\sum_{j=1}^{L}\left(\sum_{i} B_{ji} \cdot \beta_i'\right)^2 = (K-1)\cdot(B\vec{\beta})^2 \; .$$

Die Summanden $s_{g,j}'^2$ können als korrelations-bereinigte Beiträge der variablen $x_j$ zur erklärten Varianz $s_g'^2$ betrachtet werden. Ein erwartungstreuer Schätzer für die Summanden $s_{g,j}'^2$ ist

$$\hat{s}_{g,j}^2 := (K-1)\left(\sum_{i} B_{ji}\beta_i\right)^2 - d_j \cdot \frac{s_R^2}{K-J-1} \quad \text{mit der Definition } d_j := (B \cdot \tilde{C}_0^{-1} \cdot B)_{jj} \; .$$

Wurde die Regression über eine Teilmenge der Indizes j=1...J der Variablen $x_j$, j=1...L gebildet, so ist $\tilde{C}_0^{-1} \cdot$ jene Matrix, die durch Inversion jenes Teilbereichs der Kovariänzmatrix C hervorgeht, der den in die Regression aufgenommenen Variablen $x_j$, j=1..J entspricht, ergänzt um Null-Einträge in jenen Sektoren, die den nicht aufgenommenen Variablen entsprechen.

Auch für die nicht in die Regression aufgenommenen Variablen gilt dann aufgrund der Korrelation mit den aufgenommenen Variablen, dass im Allgemeinen $\hat{s}_{g,j}^2 \neq 0$.

Für eine gegebene Menge lokaler Regressionen wird nun der Beitrag einer Variable $x_j$ zur erklärten Varianz des Gesamtmodells durch eine gewichtete Summe bestimmt:

$$\overline{\hat{s}_{g,j}^2} := \sum_{l=1}^{N} \frac{H_l}{K_l} \cdot \hat{s}_{g,j}^{2(l)} \quad .$$

Definiert man für den positiven Anteil an der erklärten Varianz im Gesamtmodell:

$$s_{p,j}^2 := \begin{cases} \overline{\hat{s}_{g,j}^2}, & \text{für} \quad \overline{\hat{s}_{g,j}^2} > 0 \\ 0, & \text{sonst} \end{cases},$$

so ergibt sich als Kennzahl für den relativen Einfluss $I_j$ ("Influence") der Variablen $x_j$ auf die erklärte Varianz des Gesamtmodells:

$$I_j := \frac{s_{p,j}^2}{\sum_{i=1}^{L} s_{p,i}^2} \; .$$

Das nichtlineare Bestimmtheitsmaß $R_{NL}^2$ kann mit dem relativen Einfluss $I_j$ ebenfalls den einzelnen Variablen $x_j$ zugeordnet werden, und zwar gemäß der Beziehung

$$R_{NL,j}^2 := I_j \cdot R_{NL}^2 \; .$$

Diese Zerlegung wird vorzugsweise zur Beschreibung der Beiträge einzelner Variablen zum nichtlinearen Bestimmtheitsmaß eines aus einer Menge lokaler Regressionen gebildeten Gesamtmodells herangezogen.

Wie bereits erwähnt und jetzt nachfolgend verdeutlicht ist die erklärbare Varianz von der Ordnung der SOM abhängig.

Zum Zwecke der einfacheren Beschreibung wird im Weiteren davon ausgegangen, dass die Datenverteilung in den Raum der Hauptkomponenten transformiert wurde bzw. dass äquivalent dazu gilt: $c_{ij} := (diag)_{ij}$.

Der Verlust an Information durch die mangelnde Ordnung der Datenrepräsentation der SOM hinsichtlich der Variablen $x_j$ kann durch die mittlere Reichweite $\lambda_j$ ausgedrückt werden (vgl. oben). Der Zusammenhang zwischen dem Verlust an erklärbarer Varianz und der Reichweite $\lambda_j$ kann empirisch durch eine Verlustfunktion $D(\lambda_j^2)$ gemäß folgender Beziehung approximiert werden:

$$D(\lambda_j^2) := \frac{R_{NL}^2(\lambda_j^2)}{R_{NL}^2(0)} \approx 1 - \lambda_j^2.$$

Im vorliegenden Verfahren werden jene Variablen $x_j$, die auf die erklärte Varianz der Zielgröße y bzw. auf das Residuum u einen großen Einfluss haben, stärker gewichtet, d.h. mit einem größeren Skalierungsfaktor versehen, so dass die nichtlineare Abhängigkeit der Variablen $x_j$ besser berücksichtigt und somit das nichtlineare Bestimmtheitsmaß $R_{NL}^2$ maximierbar wird.

Für die nun folgende Untersuchung der Abhängigkeit der mittleren Reichweite von den internen Skalierungen der SOM wird angenommen, dass die internen Skalierungen $\sigma_q$ der transformierten Datenverteilung gemäß der Beziehung

$$x_{k,q} = A_{iq} \cdot x_{k,i}$$

vorliegen.

Im Hauptkomponentenraum hängen die Reichweiten $\lambda_q$ in einfachster Näherung von $\sigma_q$ in einer Form ab, die heuristisch durch folgenden funktionalen Zusammenhang angenähert werden kann:

$$\lambda_q(\sigma_1, \ldots \sigma_Q, r_i) \approx \tanh\left( const \cdot r_i \cdot \frac{\sigma_q^{-2}}{\sum_{q'}^{Q} \sigma_{q'}^{-2}} \right).$$

Dieser Zusammenhang $\lambda_q(\sigma_q)$ ist hinreichend genau, um eine iterative Maximierung (s. Schleife 22 in Fig.3) des nichtlinearen Bestimmtheitsmaßes $R_{NL}^2$ durch Variation der internen Skalierungen $\sigma_q$ zu ermöglichen.

Die oben erläuterten Schritte zur Bestimmung einer günstigen Datenrepräsentation werden nun so mit der Optimierung der lokalen rezeptiven Bereiche verknüpft, dass die nichtlinear erklärte Varianz im Residuum maximiert wird, d.h. die Prognosegenauigkeit des Gesamtmodells optimiert wird, wie nunmehr näher erläutert wird.

Zur Vereinfachung wird im Folgenden die Datenverteilung wieder als in Hauptkomponenten transformiert angenommen. Unter der näherungsweisen Voraussetzung, dass im Hauptkomponentenraum die Verlust funktionen $D(\lambda_q^2)$ voneinander unabhängig sind, ergibt sich für den durch die Variable $x_q$ maximal erklärbaren Varianzanteil:

$$R_{NL,q}^2(0) = \frac{I_q}{D(\lambda_q^2)} \cdot R_{NL}^2.$$

Bei einer Änderung der internen Skalierungen $\sigma_q \rightarrow \sigma'_q$ folgt hieraus eine relative Änderung $\psi$ der erklärten

Varianz im Gesamtmodell, d.h. von $R_{NL}^2$ gemäß:

$$\Psi(\sigma_1';...\sigma_Q') = \sum_{q=1}^{Q} I_q \cdot \frac{D(\lambda_q'^2)}{D(\lambda_q^2)} \quad .$$

Durch Variation von $\sigma'_q$ kann nun $R_{NL}^2$ iterativ oder expliziert maximiert werden. Vorzugsweise geschieht dies durch parametrische Näherung der Bedingung (s. Block 21 in Fig.3) ( $\Psi(\sigma_1',...\sigma_Q') \rightarrow \max$ , auf Basis der partiellen Ableitungen $\frac{\partial \Psi}{\partial \sigma_q'}$ . (sog. "hill climbing"), woraus ein neuer Satz von $\lambda'_q$ und hieraus ein Satz von Skalie-rungen $\sigma'_q$ folgt. Diese haben die Form $\sigma_q'^2 = \sigma_q^2 \frac{\text{arctanh}(\lambda_q)}{\text{arctanh}(\lambda_q')}$ .

Diese neuen Skalierungen führen zu einer neuen SOM-Repräsentation der Daten, welche die Nichtlinearitäten im Zusammenhang $y(x_q)$ besser auflöst als auf Basis der Skalierungen in der vorherigen Iterationsstufe.

Durch wiederholte Anwendung der Re-Skalierungen $\sigma_q \rightarrow \sigma'_q$ (Schleife 22 in Fig.3) erreicht man so eine sukzessive Verbesserung der Datenrepräsentation, in welcher die Prognosegenauigkeit des Gesamtmodells durch die Optimierung der rezeptiven Reichweiten maximiert wird.

Die erhaltenen optimierten Prognosemodelle und Kenngrößen werden bevorzugt auch visualisiert, vgl. Block 25 in Fig.3, um eine zusätzliche Validierung des Gesamtmodells zu erlauben.

Gemäß Block 26 in Fig.3 werden die auf diese weise erhaltenen optimierten Prognosemodelle für alle Knoten in passender Weise auf neue Daten (siehe Block 27 in Fig.3) angewandt, um so eine optimierte Prognose (Block 28) zu erzielen. Hierbei wird jeweils das lokale Prognosemodell jenes Knotens auf den jeweils neuen Datensatz angewandt, dessen Repräsentant dem Datensatz am nächsten liegt (vgl. oben).

Nachfolgend wird der vorstehend allgemein beschriebene Ablauf in einer konkreten beispielhaften Anwendung für die Steuerung eines Stahl-Stranggusses - mit den Variablen ($x_1$ bis $x_3$): Temperatur T (Strangschale), Strangabzugsgeschwindigkeit V und Legierungsbestandteil-Konzentration K (für Chrom) - näher erläutert, wobei die Zielgröße ein bestimmtes Stahlqualitäts-Maß, nämlich beispielhaft die Zugfestigkeit des Stahls, ist. Dabei wird der Stahlproduktionsprozess durch die laufende Prognose der Stahlqualität (die Zugfestigkeit) optimiert. Anhand der prognostizierten Qualität werden die Steuerparameter (in diesem Beispiel die Abzugsgeschwindigkeit V) laufend so verändert, dass die tatsächliche Zugfestigkeit die geforderte Höhe oder Güte erreicht.

Zur Vereinfachung wird angenommen, dass bei diesem Verfahren lediglich die drei genannten Steuergrößen V, K und T des Prozesszustands die Stahlqualität bestimmen:

Als historische Daten zur Modellerstellung wurden in diesem Beispiel 26.014 Datensätze im Laufe eines Produktionsprozesses erhoben. Die einzelnen Variablen mit den Mittelwerten

V = 0,291 m/s
K = 2,23% Cr
T = 540˚C

wurden in der Datenvorverarbeitung jeweils auf einen Mittelwert = 0 und eine Varianz = 1 standardisiert und in dieser Form weiter verarbeitet.

Die errechneten und optimierten lokalen Regressionsmodelle können auf einzelne zugehörige, "lokale" Steuereinheiten 30.1...30.n aufgeteilt werden, wie im Schema von Fig.8 gezeigt ist; die Berechnung der Prognosewerte kann in diesem Fall in den lokalen Steuereinheiten 30.1 ... 30.n stattfinden und dient zur Steuerung von zugehörigen, angeschlossenen Prozesseinheiten 31.1-31.n. Es ist aber auch möglich, das Gesamtmodell zentral zu verwalten und die Prognosewerte für die lokalen Steuereinheiten 30.1...30.n zentral zu berechnen und anschließend entsprechend zu verteilen.

In Fig.8 ist im Übrigen weiters bei 32 eine Datenbank für die Prozessdaten veranschaulicht, die in einer Datenkompressions- und Repräsentationseinheit 33 für die SOM-Repräsentation aufbereitet werden. Bei 3 ist in Fig.8 die bereits anhand der Fig.1 erläuterte Prediktionseinheit veranschaulicht, der die vorstehend erwähnten Steuereinheiten 30.1, 30.2 ... 30.n nachgeordnet sind. An letztere schließen die Prozesseinheiten 31.1, 31.2 ... 31.n an, die schließlich zu einer Prozesssystem-Einheit 34 führen.

Die Komponenten 32, 33 können als Einrichtung für die Datenhaltung 35 bezeichnet werden, wogegen die Einheiten 3 und 30.1, 30.2...30.n ein Steuersystem 36 und die Prozesseinheiten 31.1, 31.2...31.n sowie die Prozesssystem-Einheit 34 ein operatives System 37 definieren.

Im Folgenden wird nun das vorliegende Verfahren anhand des angesprochenen Stahlguss-Beispiels mit den Variablen Konzentration K, Geschwindigkeit V und Temperatur T sowie der Zielgröße Zugfestigkeit exemplarisch durchlaufen. Ziel dabei ist, die Zugfestigkeit durch optimale Einstellung von V aufgrund einer möglichst genauen und selektiven Prognose der Zugfestigkeit zu optimieren.

In einer ersten Stufe des Verfahrens wurde zunächst eine vollständige, globale Regression der Zugfestigkeit auf alle drei Variablen K, V und T gebildet. Diese weist ein korrigiertes Bestimmtheitsmaß von 0,414 auf, d.h. es können 41,4% der gesamten Streuung durch die globale Regression erklärt werden. Daraufhin wurde mit Hilfe der internen Skalierungen $\sigma_j$ zur Kompensation von Korrelationen eine SOM errechnet, die in einer etwas vereinfachten Darstellung in Fig.9A (für die Variable V = Strangabzugsgeschwin-digkeit); Fig.9B (für die Variable K = Konzentration von Cr); und Fig.9C (für die Variable T = Strangtemperatur beim Abziehen) zu sehen ist. Die Vereinfachung wurde insbesondere aufgrund des Verzichts der Mächtigkeit einer farbcodierten Wertedarstellung vorgenommen; statt dessen wurde eine fünfstufige Schwarz/weiß-Darstellung gewählt, wobei weiß den niedrigsten Wert darstellt, gepunktete Flächen den nächst niedrigen u.s.w., und wobei schwarz die Flächenfüllung für Bereiche mit den höchsten Werten ist.

In der Darstellung von Fig.9 ist insbesondere in Fig.9A (für die Variable V, also die Abzugsgeschwindigkeit) zu erkennen, dass die Werte über den gesamten Bereich relativ stark gestreut sind, d.h. mäßig gut geordnet sind.

In den Darstellungen von Fig.9 (vgl. insbesondere Fig.9A) wurde weiters auch zur besseren Verständlichkeit einer der Knoten - bei I - samt rezeptivem Bereich eingezeichnet, wobei in Fig.9A auch ein zugehöriger rezeptiver Radius r eingetragen wurde, der den (kreisförmigen) rezeptiven Bereich definiert.

Betrachtet man den nichtlinearen Einfluss der einzelnen Variablen für diese Repräsentation, so ergibt sich, dass der nichtlineare Einfluss der Abzugsgeschwindigkeit V im Vergleich zu den anderen Variablen am größten ist. Folgende nichtlineare Einflüsse $I_j$, mit j = V, K, T, errechnen sich für die einzelnen Variablen:

$$I_V = 0,687, \quad I_K = 0,210, \quad I_T = 0,103.$$

Als nichtlineares Bestimmtheitsmaß $R^2_{NL}$ der ersten Iteration ergibt sich $R^2_{NL} = 0,238.$ Dieser Wert bedeutet, dass von der global unerklärt gebliebenen Varianz noch 23,8% durch nichtlineare (lokale) Regressionen erklärt werden können.

Daraus leiten sich (s. die vorstehenden Darlegungen) jene internen Skalierungen ab, die die Nichtlinearitäten und Ordnungsmaße dieses Iterationsschrittes für eine verbesserte SOM-Darstellung ergeben:

$$\sigma'_V = 1,634, \quad \sigma'_K = 0,711, \quad \sigma'_T = 0,543.$$

Mit diesen neuen internen Skalierungen wird nun die SOM-Datenrepräsentation der nächsten Iteration parametrisiert, wobei sich gegenüber Fig.9 modifizierte SOM-Darstellungen ergeben, und zwar gemäß Fig.10A für V, gemäß Fig.10B für K und gemäß Fig.10C für T. Aus diesen neuen SOM-Repräsentationen ist zu erkennen, dass die Ordnung innerhalb der Fig.10A (für die Abzugsgeschwindigkeit V) erhöht wurde, während insbesondere die Ordnung in Fig.10C (Temperatur) geringer geworden ist. Dies entspricht der Anforderung, Nichtlinearitäten durch die SOM-Repräsentation besser erkennen und in den lokalen Regressionen nutzen zu können.

Mit den jeweiligen Nichtlinearitäts- und Ordnungsmaßen sowie dem nichtlinearen Bestimmtsheitsmaß $R^2_{NL}$ errechnen sich sodann die internen Skalierungen für die nächste Iteration, deren Ergebnis in Fig.11A, 11B und 11C dargestellt ist. Dabei ist im Einzelnen beispielhaft für die Variable V (Abzugsgeschwindigkeit) in Fig.11A deren SOM-Repräsentation gezeigt, in Fig.11B ist der standardisierte lokale Regressionskoeffizient $\beta_V^{(1)}$ für die Abzugsgeschwindigkeit auf die Zugfestigkeit (=Zielvariable) veranschaulicht, und in Fig.11C ist die zugehörige Verteilung der optimalen rezeptiven Radien für die lokale lineare Regression über der Datengesamtheit dargestellt.

Wie aus der Darstellung in Fig.11A ersichtlich ist, ist die Ordnung innerhalb der SOM für die Variable V im letzten Iterationsschritt weiter erhöht worden.

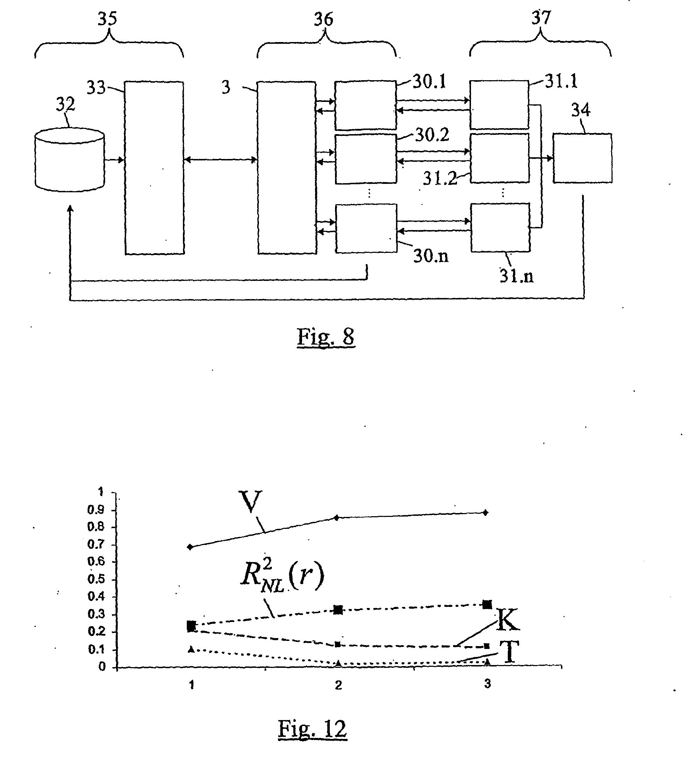

In Fig.12 ist die Änderung aller Parameter K, V und T sowie von $R^2_{NL}$ über die drei Iterationsstufen Nr. 1, 2 und 3 in einem Dia-gramm gezeigt.

Im Einzelnen enthält Fig.12 die Darstellung des Verlaufs der nichtlinearen Einflüsse für die einzelnen Variablen K, V, T sowie des resultierenden Parameters $R^2_{NL}$ über den Iterationsschritten 1, 2 und 3. Durch das nichtlineare Bestimmtheitsmaß $R^2_{NL}$ können nach dem 3. Schritt auch von den verbliebenen 58,6% der global unerklärten Varianz 34,7% nichtlinear erklärt werden, so dass nun insgesamt 61,7% der gesamten Streuung erklärt werden können.

Im Produktionsprozess erfolgt der Einsatz des Prognosemodells durch die Zuordnung jedes neuen Prozessdatensatzes zu jenem Knoten, welcher dem jeweiligen Zustands- bzw. Qualitätsbereich des Prozesses entspricht. Für jeden dieser Bereiche gibt es nun ein eigenes Prognosemodell, das den Zusammenhang der Einflussgrößen mit dem Zielwert selektiv beschreibt.

Die Zuordnung erfolgt entsprechend dem geringsten Abstand des Datensatzes $x_j$ zum Knoten I gemäß

$$ l = \underset{l'}{\mathrm{argmin}} \left| \vec{x} - \vec{m}_{l'} \right|. $$

Das lokale Prognosemodell dieses Knotens wird sodann auf den Datensatz angewandt und die prognostizierte Zugfestigkeit zur Einstellung der optimalen Abzugsgeschwindigkeit herangezogen.

Diese im Vergleich zum Stand der Technik differenzierte Prognose erlaubt eine selektivere Vorhersage der Zugfestigkeit in Abhängigkeit von K, V und T im jeweiligen lokalen Zustandsbereich. Durch die Anwendung des Gesamtmodells auf die neuen Daten im Rahmen des Produktionsprozesses kommt es so zu einer insgesamten Qualitätsverbesserung des produzierten Stahlproduktes.

In ähnlicher Weise lässt sich die Erfindung selbstverständlich auf die verschiedensten Produktionsprozesse etc. anwenden, insbesondere auch bei Fertigungslinien, ebenso wie auf automatische Verteilsysteme und andere operative Systeme.

**Patentansprüche**

1. Verfahren zur rechnergestützten Erstellung von Prognosen für operative Systeme (37), z.B. für Steuerungsprozesse u. dgl., auf Basis von mehrdimensionalen, einen System-, Produkt- und/oder Prozesszustand beschreibenden Datensätzen unter Anwendung der Self-Organizing-Maps-Methode (SOM-Methode), bei der ein geordnetes Raster von die Datenverteilung repräsentierenden Knoten (I) bestimmt wird, **dadurch gekennzeichnet, dass** zur Berücksichtigung von Nichtlinearitäten in den Daten eine interne Skalierung ($\sigma_j$) von Variablen ($x_j$) aufgrund des nichtlinearen Einflusses jeder Variablen auf die Prognosevariable (y) vorgenommen wird, dass den Knoten (I) zugeordnete lokale rezeptive Bereiche ermittelt werden, auf deren Basis lokale lineare Regressionen berechnet werden, und dass anhand der so erhaltenen Menge lokaler Prognosemodelle optimierte Prognosewerte für die Steuerung des operativen Systems (37) berechnet werden, indem für jeden neuen Datensatz der jeweils adäquate Knoten bestimmt und das lokale Prognosemodell auf diesen Datensatz angewandt wird.

2. Verfahren nach Anspruch 1, **dadurch gekennzeichnet, dass** für jede Variable eine Maßzahl für ihre Ordnung in der -SOM-Repräsentation sowie eine Maßzahl für ihren Beitrag zur erklärten Varianz gebildet wird, wobei aus diesen Maßzahlen neue interne Skalierungen ($\sigma_2$) auf der Basis ermittelt werden, dass die geschätzte Änderung ($\psi$) der erklärten Varianz durch Variation der internen Skalierungen maximiert wird, wodurch die Variablen in der resultierenden SOM-Repräsentation entsprechend ihren Beiträgen zur erklärten Varianz geordnet und so die vorhandenen Nichtlinearitäten genauer aufgelöst werden.

3. Verfahren nach Anspruch 1 oder 2, **dadurch gekennzeichnet, dass** bei der Ermittlung der den Knoten (I) zugeordneten rezeptiven Bereiche (r) deren Größe jeweils so groß gewählt wird, dass die erklärte Varianz der lokalen Regression bei gleichzeitiger Sicherstellung der Signifikanz und Stabilität im Bereich des Knotens maximal ist.

4. Verfahren nach Anspruch 3, **dadurch gekennzeichnet, dass** bei der Ermittlung der den Knoten (I) zugeordneten rezeptiven Bereiche (r) jeweils der für die Signifikanz der Regression kleinstnotwendige, für die Maximierung der Prognosegenauigkeit größtmögliche rezeptive Bereich gewählt wird.

5. Verfahren nach einem der Ansprüche 1 bis 4, **dadurch gekennzeichnet, dass** die interne Skalierung iterativ durchgeführt wird.

6. Verfahren nach einem der Ansprüche 1 bis 5, **dadurch gekennzeichnet, dass** zum zumindest teilweisen Ausgleichen etwaiger Korrelationen zwischen Variablen (j) die zugeführten Daten vorab einer kompensierenden Skalierung $\left(\pi_j^{\mathrm{comp}}\right)$ unterworfen werden.

7. Verfahren nach Anspruch 6, **dadurch gekennzeichnet, dass** zur kompensierenden Skalierung die einzelnen Datensätze reskaliert werden, wobei die Werte einer jeweiligen Variablen aller Datensätze standardisiert werden, wonach die Daten in den Hauptkomponentenraum transformiert werden und die kompensierenden Skalierungen für die einzelnen Variablen auf der Basis berechnet werden, dass sich das Distanzmaß im ursprünglichen Variablenraum vom Distanzmaß im standardisierten Hauptkomponentenraum minimal unterscheidet.

8. Verfahren nach Anspruch 6 oder 7, **dadurch gekennzeichnet, dass** die kompensierende Skalierung mit der die Nichtlinearitäten in den Daten berücksichtigenden internen Skalierung multiplikativ zu einer kombinierten Variablen-Skalierung verknüpft wird, die einer demgemäß modifizierten SOM-Repräsentation zugrunde gelegt wird.

9. System zur Erstellung von Prognosen für operative Systeme, z.B. für Steuerungsprozesse, auf Basis von mehrdimensionalen, einen System-, Produkt- und/oder Prozesszustand beschreibenden Datensätzen, mit einer Datenbank (1) zur Speicherung der Datensätze sowie mit einer SOM-Einheit (2) zur Bestimmung eines geordneten Rasters von die Datenverteilung repräsentierenden Knoten, **dadurch gekennzeichnet, dass** der SOM-Einheit (2) eine zur internen Skalierung von Variablen zum Ausgleich ihres nichtlinearen Einflusses auf die Prognosevariable eingerichtete Nichtlinearitäts-Rückkopplungseinheit (4) sowie eine für die Ermittlung von lokalen linearen Regressionen auf der Basis von den Knoten zugeordneten lokalen rezeptiven Bereichen eingerichtete Berechnungseinheit (5) zugeordnet sind, wobei weiter eine Prediktionseinheit (3), vorgesehen ist, die eingerichtet ist auf der Basis der so erhaltenen lokalen Prognosemodelle optimierte Prognosewerte zu berechnen, indem für jeden neuen Datensatz der jeweils adäquate Knoten bestimmt und das lokale Prognosemodell auf diesen Datensatz angewandt wird.

10. System nach Anspruch 9, **dadurch gekennzeichnet, dass** an die Prediktionseinheit (3) mehrere, einzelnen Prozesszuständen zugeordnete Steuereinheiten (30.1...30.n) anschließen, die eingerichtet sind, Prozessergebnisse zu prognostizieren, die bei den aktuellen Prozessdaten entstehen würden.

11. System nach Anspruch 10, **dadurch gekennzeichnet, dass** an die Steuereinheiten (30.1...30.n) jeweils gesondert zugeordnete Prozesseinheiten (31.1...31.n) anschließen, die zur Herleitung von Steuerparametern auf Basis der prognostizierten Prozessergebnisse und der Sollwerte für den jeweils im operativen System durchzuführenden Prozess eingerichtet sind.

**Claims**

1. A method for the computer-aided generation of predictions for operative systems (37), for example for control processes and the like, on the basis of multidimensional data records describing the state of a system, product and/or process, and applying the Self-Organizing Maps method (SOM method) in which an ordered grid of nodes (l) representing the data distribution is determined, **characterised in that** in order to take account of nonlinearities in the data an internal scaling ($\sigma_j$) of variables ($x_j$) is undertaken on the basis of the nonlinear influence of each variable on the prediction variable (y), **in that** local receptive regions assigned to the nodes (l) are determined on the basis of which local linear regressions are calculated, and **in that** optimized prediction values for controlling the operative system (37) are calculated with the aid of the set of local prediction models that is thus obtained, this being done by determining the respectively adequate node for each new data record and applying the local prediction model to this data record.

2. A method according to claim 1, **characterised in that** for each variable a measure is formed for its order in the SOM representation and a measure is formed for its contribution to the explained variance, new internal scalings ($\sigma_2$) being determined from these measures on the basis that the estimated change ($\psi$) in the explained variance is maximized by varying the internal scalings, as a result of which the variables are brought in an order in the resulting SOM representation in accordance with their contributions to the explained variance and so the existing nonlinearities are more accurately resolved.

3. A method according to claim 1 or 2, **characterised in that** when the receptive regions (r) assigned to the nodes (l) are being determined, their magnitude is respectively selected to be so large that the explained variance of the local regression is maximal in conjunction with simultaneous safeguarding of significance and stability in the region of the node.

4. A method according to claim 3, **characterised in that** when the receptive regions (r) assigned to the nodes (l) are being determined, that respective region is selected which is the smallest necessary receptive region for the significance of the regression, and is the largest possible receptive region for maximizing the accuracy of prediction.

5. A method according to any one of claims 1 to 4, **characterised in that** the internal scaling is carried out iteratively.

6. A method according to any one of claims 1 to 5, **characterised in that** the supplied data are subjected in advance to a compensating scaling $\left( \pi_j^{comp} \right)$ in order at least partially to compensate any possible correlations between variables (j).

7. A method according to claim 6, **characterised in that** the individual data records are rescaled for the purpose of the compensating scaling, the values of a respective variable of all the data records being standardized, after which the data are transformed into the space of principal components and the compensating scalings for the individual variables are calculated on the basis that the distance measure in the original variable space differs minimally from the distance measure in the standardized principal components space.

8. A method according to claim 6 or 7, **characterised in that** the compensating scaling is multiplicatively combined with the internal scaling, which takes account of the nonlinearities in the data, in order to form a combined variable scaling on which a SOM representation modified in accordance therewith is based.

9. A system for the generation of predictions for operative systems, for example for control processes, on the basis of multidimensional data records describing a state of a system, product and/or process, having a database (1) for storing the data records, and having a SOM unit (2) for determining an ordered grid of nodes representing the data distribution, **characterised in that** the SOM unit (2) is assigned a nonlinearity feedback unit (4) arranged for the internal scaling of variables in order to compensate their nonlinear influence on the prediction variable, and also a calculation unit (5) arranged for determining local linear regressions on the basis of local receptive regions assigned to the nodes, there further being provided a prediction unit (3) that is arranged to use the local prediction models thus obtained as a basis for calculating optimized prediction values by determining the respectively adequate node for each new data record and applying the local prediction model to this data record.

10. A system according to claim 9, **characterised in that** a number of control units (30.1...30.n) assigned to individual process states are connected to the prediction unit (3) and are arranged to predict the process results that would arise from the current process data.

11. A system according to claim 10, **characterised in that** connected to the control units (30.1...30.n) are respectively separately assigned process units (31.1...31.n) that are arranged to derive control parameters on the basis of the predicted process results and of the desired values for the process respectively to be carried out in the operative system.

## Revendications

1. Procédé d'élaboration assistée par ordinateur de prévisions pour systèmes opérationnels (37), par exemple pour des processus de commande et analogue, sur la base d'ensembles de données multidimensionnels décrivant l'état d'un système, d'un produit et/ou d'un processus, moyennant l'application du procédé à cartes auto-organisatrices (procédé SOM, self-organizing maps method) dans lequel on détermine une grille ordonnée de noeuds (l) représentant la distribution des données, **caractérisé en ce que**, pour prendre en considération des non-linéarités dans les données, on effectue une mise à l'échelle interne ($\sigma_j$) de variables ($x_j$) en raison de l'influence non linéaire de chaque variable sur la variable de prévision (y), **en ce qu'**on détermine des zones réceptives locales associées aux noeuds (l) sur la base desquelles on calcule des régressions linéaires locales, et **en ce que**, au moyen du nombre ainsi obtenu de modèles de prévision locaux, on calcule des valeurs de prévision optimisées destinées à la commande du système opérationnel (37), le noeud adéquat courant étant déterminé pour chaque nouvel ensemble de données et le modèle de prévision local étant appliqué à cet ensemble de données.

**2.** Procédé selon la revendication 1, **caractérisé en ce que**, pour chaque variable, on forme une cote pour son niveau dans la représentation par cartes auto-organisatrices (représentation SOM) ainsi qu'une cote pour sa contribution à la variance expliquée, de nouvelles mises à l'échelle internes ($\sigma_2$) étant déterminées à partir de ces cotes sur une base telle que le changement ($\psi$) estimé de la variance expliquée soit maximalisé par variation des mises à l'échelle internes, ce qui permet d'ordonner les variables dans la représentation SOM résultante en fonction de leurs contributions à la variance expliquée et, ainsi, d'enlever les non-linéarités existantes avec plus de précision.

**3.** Procédé selon la revendication 1 ou 2, **caractérisé en ce que**, lors de la détermination des zones réceptives (r) associées aux noeuds (l), on choisit chaque fois leur grandeur de telle sorte que la variance expliquée de la régression locale soit maximale tout en garantissant en même temps la significativité et la stabilité dans la zone du noeud.

**4.** Procédé selon la revendication 3, **caractérisé en ce que**, lors de la détermination des zones réceptives (r) associées aux noeuds (l), on choisit chaque fois la zone réceptive minimale nécessaire pour la significativité de la régression et la plus grande possible pour maximaliser la précision de prévision.

**5.** Procédé selon l'une des revendications 1 à 4, **caractérisé en ce que** la mise à l'échelle interne est effectuée par itération.

**6.** Procédé selon l'une des revendications 1 à 5, **caractérisé en ce que**, pour compenser au moins partiellement des corrélations éventuelles entre des variables (j), les données amenées sont préalablement soumises à une mise à l'échelle compensative ($\pi_j^{\text{comp}}$).

**7.** Procédé selon la revendication 6, **caractérisé en ce que**, pour effectuer une mise à l'échelle compensative, les différents ensembles de données sont remis à l'échelle, les valeurs d'une variable respective de tous les ensembles de données étant normalisées, après quoi les données sont transformées en l'espace de composants principaux et les mises à l'échelle compensatives pour les différentes variables sont calculées sur une base telle que la mesure de distance dans l'espace de variables initial se distingue au minimum de la mesure de distance dans l'espace de composants principaux normalisé.

**8.** Procédé selon la revendication 6 ou 7, **caractérisé en ce que** la mise à l'échelle compensative est combinée de manière multiplicative à la mise à l'échelle interne qui prend en considération les non-linéarités dans les données, et ce, pour former une mise à l'échelle combinée de variable qui est prise pour base d'une représentation par cartes auto-organisatrices modifiée en conséquence.

**9.** Système d'élaboration de prévisions pour systèmes opérationnels, par exemple pour des processus de commande, sur la base d'ensembles de données multidimensionnels décrivant l'état d'un système, d'un produit et/ou d'un processus, comportant une banque de données (1) servant à la mise en mémoire des ensembles de données ainsi qu'une unité de cartes auto-organisatrices (2) servant à déterminer une grille ordonnée de noeuds représentant la distribution des données, **caractérisé en ce qu'**à l'unité de cartes auto-organisatrices (2) sont associées une unité de rétroaction de non-linéarité (4) configurée pour la mise à l'échelle interne de variables en vue de compenser leur influence non linéaire sur la variable de prévision, ainsi qu'une unité de calcul (5) configurée pour la détermination de régressions linéaires locales sur la base des zones réceptives locales associées aux noeuds, moyennant quoi il est de plus prévu une unité de prévision (3) qui est configurée pour calculer, sur la base des modèles de prévision locaux ainsi obtenus, des valeurs de prévision optimisées, le noeud adéquat courant étant déterminé pour chaque nouvel ensemble de données et le modèle de prévision local étant appliqué à cet ensemble de données.

**10.** Système selon la revendication 9, **caractérisé en ce qu'**à l'unité de prédiction (3) se raccordent plusieurs unités de commande (30.1 ... 30.n) associées à différents états de processus qui sont configurées pour prévoir des résultats de processus qui se produiraient avec les données de processus courantes.

**11.** Système selon la revendication 10, **caractérisé en ce qu'**aux unités de commande (30.1 ... 30.n) se raccordent des unités de processus (31.1 ... 31.n), chaque fois associées séparément, qui sont configurées pour déduire des paramètres de commande sur la base des résultats de processus prévus et des valeurs de consigne qui se rapportent au processus courant à effectuer dans le système opérationnel.

Fig. 1

Fig. 2

14

| Daten, Zielgröße |

15
| Globale Regression, Residuen |

16
| Interne Skalierungen |

17
| SOM Datenrepräsentation |

18
| Lokale Regressionen auf die Residuen für verschiedene rezeptive Radien |

19
| Optimale rezeptive Radien für alle Knoten |

20
| Lokale Prognosemodelle für alle Knoten für die optimalen rezeptiven Radien |

22

23
| Nichtlinearitätsmaße für das aktuelle Gesamtmodell |

24
| Ordnungsmaße für die aktuelle Datenrepräsentation |

21
| Optimierte relative Skalierungen zur Berücksichtigung nichtlinearer Zusammenhänge |

25
| Visualisierung der optimierten Modelle und Kenngrößen |

27
| Neue Daten |

26
| Optimierte Prognosemodelle für alle Knoten |

28
| Prognose |

**Fig. 3**

Fig. 4

Fig. 5

$$R^2_{NL}(r)$$

$$r_{opt}$$

$$r$$

Fig. 6

$$\hat{\sigma}^2_R\Big|_{Test}$$

$$r_l^{Test} \qquad r_l^{opt}$$

$$r_l$$

Fig. 7

V $r$ $l$
Fig. 9A

K
Fig. 9B

T
Fig. 9C

V
Fig. 10A

K
Fig. 10B

T
Fig. 10C

V
Fig. 11A

$\beta_V^{(l)}$
Fig. 11B

$r_{opt}$
Fig. 11C

Fig. 8

$R^2_{NL}(r)$

Fig. 12